# EUROPÄISCHE PATENTSCHRIFT

(11) **EP 0 575 384 B1**
(45) Veröffentlichungstag und Bekanntmachung des Hinweises auf die Patenterteilung: **11.12.1996**
(21) Anmeldenummer: 92905780.0
(22) Anmeldetag: 10.03.1992
(51) Int. Cl.: F16F 9/46

(54) **ZWEIROHR-STOSSDÄMPFER**
TWIN-TUBE SHOCK ABSORBER
AMORTISSEUR BITUBE

(30) Priorität: 13.03.1991 DE 4108027; 14.11.1991 DE 4137403
(43) Veröffentlichungstag der Anmeldung: 29.12.1993
(73) Patentinhaber: ITT Automotive Europe GmbH, 60488 Frankfurt (DE)
(72) Erfinder: LOHBERG, Peter, D-6382 Friedrichsdorf (DE); BAYER, Ronald, D-6052 Mühlheim/Main 2 (DE); HALAT, Siegfried, D-6000 Frankfurt am Main 70 (DE); KIRCHER, Dieter, D-6368 Dortelweil (DE); PEREZ, Diogenes, D-6000 Frankfurt am Main 71 (DE); SPARSCHUH, Stefan, D-6051 Saulheim (DE)
(86) Internationale Anmeldenummer: EP9200520
(87) Internationale Veröffentlichungsnummer: WO9216772

(56) Entgegenhaltungen:
- EP-A- 0 123 365
- EP-A- 0 246 468
- EP-A- 0 364 757
- WO-A-88/06983
- WO-A-89/09891
- CH-A- 368 236
- DE-A- 2 315 661
- GB-A- 946 589
- GB-A- 2 190 461
- US-A- 3 491 216
- US-A- 3 763 334
- PATENT ABSTRACTS OF JAPAN vol. 1, no. 076 (E-30)21. Juli 1977
- PATENT ABSTRACTS OF JAPAN vol. 13, no. 320 (M-853)(3668) 20. Juli 1989 & JP-A-01 106 721 (TOKICO LTD) 24 April 1989
- PATENT ABSTRACTS OF JAPAN vol. 1, no. 076 (E-30)21. Juli 1977 & JP-A-52 013 311 (HITACHI KINZOKU KK) 2 January 1977

## Beschreibung

Die Erfindung betrifft einen regelbaren Zweirohr-Stoßdämpfer mit regelbarer variabler Dämpfungskraft für Kraftfahrzeuge gemäß Oberbegriff des Anspruchs 1.

Ein derartiger Zweirohr-Stoßdämpfer ist aus der internationalen Patentanmeldung WO 89/09891 bekannt. Das Besondere an diesem bekannten Zweirohr-Stoßdämpfer besteht darin, daß seine Dämpfungskraft ausschließlich mittels eines am unteren Ende des Zentralrohres angeordneten zweistufigen regelbaren Dämpferventils vorgegeben wird, das in nur einer Richtung durchströmt wird. Das Vorsteuerventil des Dämpferventils dient dabei lediglich der Ansteuerung des Hauptventils, dessen Durchflußquerschnitt die zu variierende Dämpfungskraft bestimmt.

Als nachteilig wird jedoch bei dem vorbekannten regelbaren Stoßdämpfer die Tatsache empfunden, daß außer der elektromagnetischen Stellkraft am Vorsteuerventil ein hydraulischer Mindestdruck im System erforderlich ist, um die Funktion des Stoßdämpfers im üblichen Einsatzbereich sicherzustellen. Weniger vorteilhaft anzusehen sind auch die mit dieser Anordnung erzielbaren Regelzeiten, die für ein schnell agierendes Stoßdämpfersystem zu lang sind. Die aus Fahrkomfortsgründen gewünschte "weiche" Kennlinie und schnelle Verstellbarkeit sind aus obigen Gründen nicht erreichbar.

Es ist daher Aufgabe der vorliegenden Erfindung, einen Zweirohr-Stoßdämpfer der eingangs genannten Art anzugeben, der die vorstehend erwähnten Nachteile überwindet. Ferner soll ein Zweirohr-Stoßdämpfer angegeben werden, der ein Einstellen einer speziellen gewünschten Kennlinie, d.h. der Abhängigkeit der Dämpfungskraft von der Kolbengeschwindigkeit aus einem Feld möglicher Kennlinien ermöglicht.

Diese Aufgabe wird erfindungsgemäß dadurch gelöst, daß die Dämpfungskraft in einem unteren Kolbengeschwindigkeitsbereich lediglich durch den veränderbaren Durchflußquerschnitt des Vorsteuerventils bestimmt wird, während das Hauptventil geschlossen bleibt, und daß die Dämpfungskraft in einem oberen Kolbengeschwindigkeitsbereich durch die veränderbaren Durchflußquerschnitte des Haupt- sowie des Vorsteuerventils bestimmt wird.

Dabei ist vorteilhaft, daß das Hauptventil im oberen Kolbengeschwindigkeitsbereich der Position des Vorsteuerventils folgt. Durch diese Maßnahme wird eine höhere Dynamik der Ventilverstellung bei gleichzeitiger Verminderung der Schwingungsneigung des Stoßdämpfers, insbesondere bei dessen Einsatz in einem Fahrwerksregelungsprozeß, erreicht.

Eine weitere vorteilhafte Weiterbildung des Erfindungsgegenstandes besteht darin, daß das Hauptventil sowie das Vorsteuerventil getrennt vom zweiten Rückschlagventil in einem Ventilgehäuse angeordnet sind, wobei das Hauptventil durch einen mit einer im Ventilgehäuse ausgebildeten Steuerkante zusammenwirkenden Hauptschieber und das Vorsteuerventil durch einen elektromagnetisch betätigbaren, mit im Hauptschieber ausgebildeten Steuerbohrungen zusammenwirkenden Steuerschieber gebildet sind. Ein derart aufgebautes zweistufiges Dämpferventil braucht weniger Stelleistung bzw. ermöglicht ein besseres Beherrschen höherer Dämpfungskräfte.

Die Steuerkante ist dabei vorzugsweise im Bereich von im Ventilgehäuse ausgebildeten, mit dem Vorratsbehälter in Verbindung stehenden Abströmbohrungen angeordnet, durch deren Größe und geometrische Form sich das Kennfeld der Hauptstufe beeinflussen läßt. Dabei ist es sinnvoll, wenn der Hauptschieber in seinem oberen Teil offen ausgebildet und mit Bohrungen versehen ist, die mit den Abströmbohrungen in Verbindung bringbar sind.

Gemäß einer weiteren bevorzugten Ausführungsform der Erfindung ist der Hauptschieber mittels einer ersten Druckfeder in Schließrichtung des Hauptventils vorgespannt und liegt an einem Anschlag an.
Diese Feder unterstützt das Schließen des Hauptventils.

Im Betrieb des erfindungsgemäßen Stoßdämpfers auftretende Ansaug- bzw. Verdrängungsprobleme an dem Hauptschieber werden vorzugsweise dadurch eliminiert, wenn die Anlage des Hauptschiebers am Anschlag mittels axialer Vorsprünge erfolgt.

Eine weitere vorteilhafte Ausgestaltung der Erfindung sieht vor, daß der Hauptschieber mit Drosselbohrungen versehen ist, die in einer durch den Hauptschieber im Ventilgehäuse begrenzten hydraulischen Kammer münden. Durch diese Maßnahme werden sowohl eine einwandfreie Ölversorgung der Vorsteuerstufe als auch funktionswichtige Druckverluste bei Durchströmung der Drosselbohrungen erreicht.

Eine vorteilhafte Koppelung des Hauptventils an das Vorsteuerventil wird bei einer weiteren Ausgestaltung des Erfindungsgegenstandes dadurch erreicht, daß der Steuerschieber im Hauptschieber geführt ist und im Ruhezustand unter Vorspannung einer zweiten Druckfeder an diesem anliegt.

Eine besonders vorteilhafte Ausführung der Erfindung, dessen Vorsteuerventil durch eine mit einem Permanentmagneten zusammenwirkende Tauchspule elektromagnetisch betätigbar ist, besteht darin, daß der Steuerschieber am Tauchspulenträger mittels eines Fesselungselementes gefesselt ist, dessen Kopf im Ruhezustand am Hauptschieber anliegt. Durch diese Maßnahme wird eine exakte Steuerung der Dämpfungskraft im unteren Kolbengeschwindigkeitsbereich sowie eine Verstellbarkeit des Dämpferventils und damit Änderungen der Dämpfungskraft ermöglicht. Gleichzeitig wird ein Überschwingen des Steuerschiebers über die Steuerbohrungen verhindert. Besonders vorteilhaft ist dabei auch das günstige dynamische Verhalten der Tauchspule.

Gemäß einer weiteren bevorzugten Ausführungsvariante ist vorgesehen, daß die aus Tauchspule und Permanentmagneten bestehende Betätigungseinheit in einem mit dem Vorratsbehälter in Verbindung stehenden hydraulischen Raum angeordnet ist, so daß das am Tauchspulenträger befestigte Ende des Fesselungselementes der Wirkung des im Vorratsbehälter herrschenden Druckes ausgesetzt ist. Dadurch wird erreicht, daß die Tauchspule lediglich dem im Vorratsbehälter herrschenden Druck ausgesetzt ist, wobei gleichzeitig eine Wirkung einer nach unten gerichteten Kraft auf das Fesselungselement erzielt wird.

Um bei einem Ausfall bzw. einer Fehlsteuerung des Dämpferventils in der Druckstufe eine unzulässig hohe Dämpfungskraft zu verhindern, sieht die Erfindung vor, daß parallel zum Haupt- bzw. Vorsteuerventil ein nicht steuerbares Ventil vorgesehen ist, das lediglich in der Druckstufe des Stoßdämpfers wirksam ist.

Dieses Ventil ist dabei vorzugsweise im Bereich des zweiten Rückschlagventils ausgebildet, besteht aus einer mit einem Ventilsitz zusammenwirkenden, durch eine Feder vorgespannten Kugel und wird, wie bereits erwähnt, nur in der Druckstufe wirksam.

Des weiteren ist es von Vorteil, wenn das Ventil in einer Verbindung zwischen der zweiten Kammer und dem Vorratsbehälter angeordnet ist, die durch Bohrungen in einem scheibenförmigen Teil des zweiten Rückschlagventils bzw. dem Ventilgehäuse gebildet ist, wobei die im Ventilgehäuse vorgesehene Bohrung in einer der Abströmbohrungen mündet. Durch diese erfinderische Maßnahme wird erreicht, daß der durch das Ventil fließende Volumenstrom in den bereits vorhandenen Vorratsbehälter geführt wird, so daß kein zusätzlicher Ölspeicher erforderlich ist.

Gemäß einer weiteren vorteilhaften Weiterbildung des Erfindungsgegenstandes erfolgt die elektromagnetische Betätigung das Vorsteuerventil mittels eines Proportionalmagneten, dessen Anker mit dem Steuerschieber mittels eines Fesselungselementes verbunden ist, dessen Kopf im Ruhezustand am Hauptschieber anliegt. Der Vorteil dieser Anordnung wird im günstigen Verhältnis der maximalen aufgebrachten Magnetkraft Fₘₐₓ zum benötigten Bauraum bzw. zur benötigten Masse gesehen.

Eine weitere bevorzugte Ausführungsvariante der Erfindung sieht vor, daß das Hauptventil sowie das Vorsteuerventil getrennt vom zweiten Rückschlagventil in einem Ventilgehäuse angeordnet sind, wobei die Hauptstufe durch einen mit einem an einem scheibenförmigen Teil des zweiten Rückschlagventils ausgebildeten Dichtsitz zusammenwirkenden Ventilkolben und das Vorsteuerventil durch einen elektromagnetisch betätigbaren, mit im Ventilkolben ausgebildeten Steuerbohrungen zusammenwirkenden Steuerschieber gebildet sind. Der Einsatz eines derart aufgebauten Sitzventils ermöglicht ein besseres Beherrschen vom im System auftretenden Verschmutzungsproblemen.

Vorteilhaft ist weiter, wenn das scheibenförmige Teil mit dem Ventilgehäuse einen hydraulischen Ringraum begrenzt, in den der Ventilkolben hineinragt und der mit dem Vorratsbehälter in Verbindung steht, wobei die oben erwähnten Steuerbohrungen im Ringraum münden. Diese Maßnahmen ermöglichen eine einfache Zusammenführung von Hauptventil und Vorsteuerventilstrom in einen gemeinsamen Vorratsbehälter.

Eine weitere vorteilhafte Ausgestaltung der Erfindung besteht darin, daß das Hauptventil sowie das Vorsteuerventil getrennt vom zweiten Rückschlagventil in einem Ventilgehäuse angeordnet sind, wobei das Hauptventil durch einen im Ventilgehäuse abgedichtet geführten, eine Ventilschließplatte tragenden, eine axiale Bohrung aufweisenden Kolben sowie einen durch die Ventilschließplatte absperrbaren bzw. freigebbaren, an einem scheibenförmigen Teil des zweiten Rückschlagventils ausgebildeten Dichtsitz gebildet ist, während das Vorsteuerventil durch einen im Ventilgehäuse ausgebildeten zylindrischen, einen in Schließrichtung federnd vorgespannten Steuerschieber aufnehmenden Raum gebildet ist, dessen axial verlaufende zylindrische Wand radiale Bohrungen aufweist, die mit im Steuerschieber ausgebildeten Steuerbohrungen zusammenwirken und eine hydraulische Verbindung einer durch den Kolben im Ventilgehäuse begrenzten Kammer mit dem Vorratsbehälter ermöglichen. Diese Anordnung ermöglicht ein Durchströmen des Vorsteuerventils senkrecht zur Bewegungsrichtung des Steuerschiebers, auch bei deren großer Öffnung, da die Position des Vorsteuerventils nur geringfügig beeinflußt wird.

Dabei ist es besonders sinnvoll, wenn das Vorsteuerventil elektromagnetisch betätigbar ist, wobei der Steuerschieber einteilig mit dem Träger einer zur elektromagnetischen Betätigungseinrichtung gehörenden Tauchspule ausgebildet ist. Durch diese Maßnahme wird eine direkte Steuerung des Dämpferventils im unteren Kolbengeschwindigkeitsbereich erreicht.

Eine Erhöhung der Qualität des Regelprozesses wird bei einer bevorzugten Weiterbildung des Erfindungsgegenstandes dadurch erreicht, daß eine den zylindrischen Raum begrenzende, waagerecht verlaufende Wand vorgesehen ist, die eine Stufenbohrung aufweist, deren Abschnitt kleineren Durchmessers in der Kammer mündet und deren Abschnitt größeren Durchmessers ein axial verschiebbares Druckstück aufnimmt, das mit der Stirnfläche des Steuerschiebers zusammenwirkt.

Es ist jedoch auch denkbar, daß eine Zwischenstellung des Steuerschiebers im Ruhezustand vorgesehen ist, in der eine teilweise Verbindung zwischen der durch den Hauptschieber bzw. Ventilkolben im Ventilgehäuse begrenzten Kammer und dem Vorratsbehälter besteht, wobei die Zwischenstellung des Steuerschiebers durch eine dritte Druckfeder erreicht ist, die der den Steuerschieber vorspannenden zweiten Druckfeder entgegenwirkt.

Eine kompakte Bauweise wird schließlich bei dem vorhin erwähnten Zweirohr-Stoßdämpfer dadurch erreicht, daß die dritte Druckfeder an der waagerechten, den zylindrischen Raum begrenzenden Wand abgestützt ist.

Weitere Einzelheiten, Merkmale und Vorteile der Erfindung gehen aus der nachfolgenden Beschreibung von sechs Ausführungsbeispielen unter Bezugnahme auf die beigefügte Zeichnung. Es zeigen:
- Fig. 1: eine erste bevorzugte Ausführungsform eines Zweirohr-Stoßdämpfers mit variabler Dämpfungskraft nach der Erfindung in einer Schnittdarstellung;
- Fig. 2: den unteren Bereich des in Fig. 1 gezeigten Zweirohr-Stoßdämpfers mit einem Dämpferventil im Schnitt in größerem Maßstab;
- Fig. 3: eine zweite Ausführungsform der Erfindung in einer der Fig. 2 entsprechenden Schnittdarstellung;
- Fig. 4: eine dritte Ausführungsform der Erfindung in einer der Fig. 2 bzw. 3 entsprechenden Schnittdarstellung;
- Fig. 5: eine gegenüber der in Fig. 1 gezeigten ersten Ausführungsform leicht modifizierte vierte Ausführungsform der Erfindung in einer der Fig. 2 entsprechenden Schnittdarstellung;
- Fig. 6: eine fünfte bevorzugte Ausführungsform des erfindungsgemäßen Zweirohr-Stoßdämpfers in einer in der Fig. 2 entsprechenden Schnittdarstellung; und
- Fig. 7: eine sechste bevorzugte Ausführungsform des erfindungsgemäßen Zweirohr-Stoßdämpfers in einer in der Fig. 2 entsprechenden Schnittdarstellung.

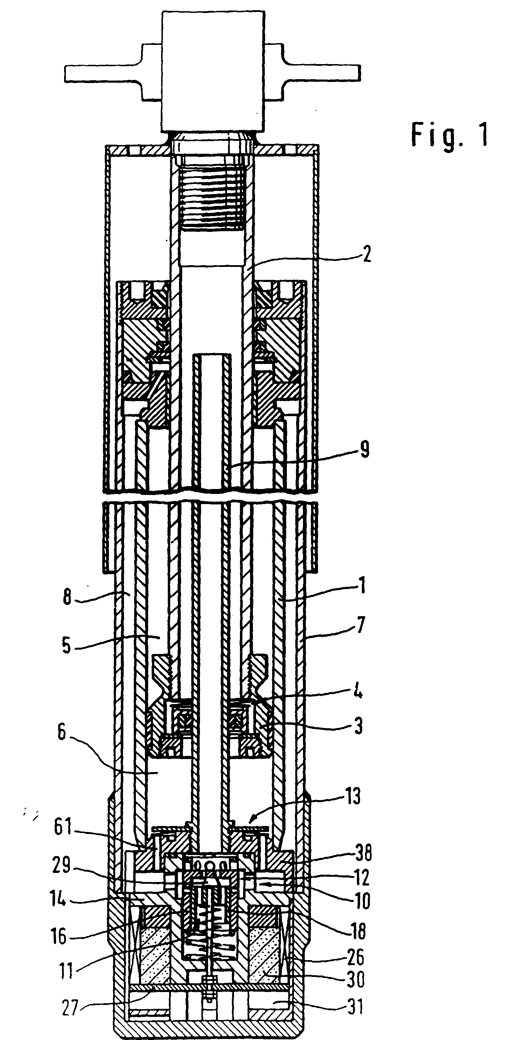

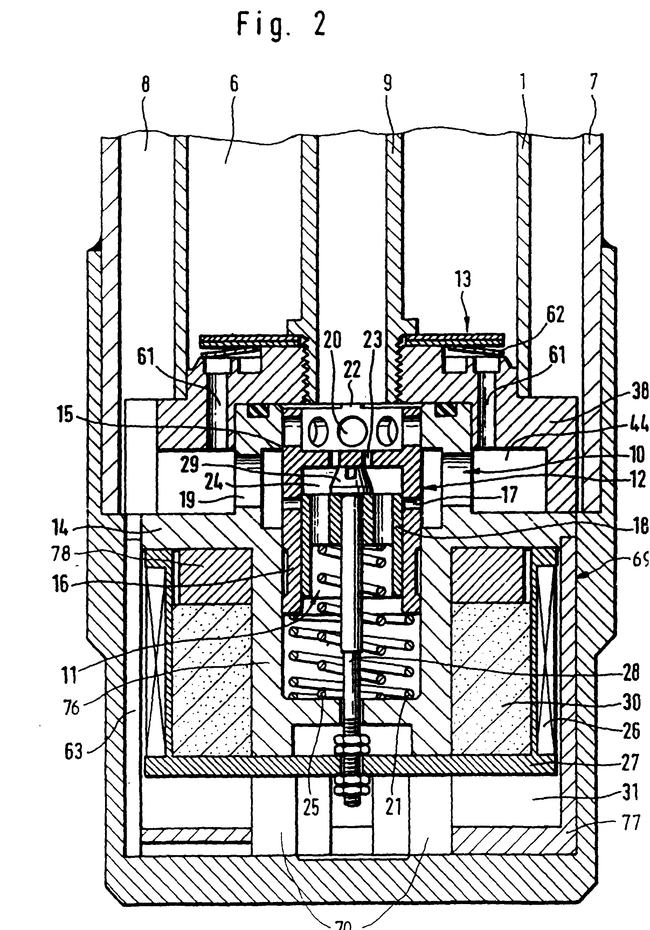

Der in Fig. 1 und 2 gezeigte Zweirohr-Stoßdämpfer nach der Erfindung weist einen hohlen Arbeitszylinder 1 sowie ein zum Arbeitszylinder 1 koaxial angeordnetes Außenrohr 7 auf, so daß dazwischen ein teilweise mit Öl gefüllter Vorratsbehälter 8 mit einem Kreisringquerschnitt gebildet wird. Der Innenraum des Arbeitszylinders 1 ist mittels eines durch eine rohrförmige Kolbenstange 2 verschiebbaren Kolbens 3 in eine oberhalb des Kolbens 3 ausgebildete erste Arbeitskammer 5 sowie eine unterhalb des Kolbens 3 ausgebildete zweite Arbeitskammer 6 unterteilt. Der Kolben 3 ist dabei mit einem ersten Rückschlagventil 4 versehen, dessen Aufgabe im nachfolgenden Text erläutert wird. In seinem mittleren Bereich wird der Kolben 3 von einem Zentralrohr 9 durchdrungen, das in die Kolbenstange 2 hineinragt und im Betrieb des Stoßdämpfers einen Volumenausgleich zwischen der ersten (5) bzw. zweiten Arbeitskammer 6 und dem Vorratsbehälter 8 ermöglicht.

Am unteren Ende des Zentralrohres 9 befindet sich eine Ventilanordnung, die durch ein zweites Rückschlagventil 13 und ein vorzugsweise zweistufig ausgebildetes Dämpferventil 10 gebildet ist und zur Änderung des Durchflußquerschnitts der Verbindung zwischen dem Zentralrohr 9 und dem Vorratsbehälter 8 dient. Das Dämpferventil 10 besteht seinerseits aus einem vorzugsweise elektromagnetisch betätigbaren Vorsteuerventil 11 sowie einem Hauptventil 12, die im oberen Kolbenpeschwindigkeitsbereich des Vorsteuerventils 11 folgt. Das zweite Rückschlagventil 13 besteht dabei aus einem am unteren Ende des Arbeitszylinders 1 angeordneten scheibenförmigem Teil 38, in dem axial verlaufende Bohrungen bzw. Kanäle 61 vorgesehen sind, die mit einer Federscheibe 62 zusammenwirken, die deren Schließen bzw. Öffnen ermöglicht. Das scheibenförmige Teil 38 begrenzt einen hydraulischen Ringraum 44, der mit dem Vorratsbehälter 8 in Verbindung steht.

Das Dämpferventil 10 besteht aus einem am scheibenförmigen Teil 38 axial anliegenden Ventilgehäuse 14, das sowohl das Vorsteuer- (11) als auch das Hauptventil 12 aufnimmt. Das Hauptventil 12 weist vorzugsweise einen im Ventilgehäuse 14 verschiebbar geführten Hauptschieber 16 auf, der mit einer im Ventilgehäuse 14 ausgebildeten Steuerkante 15 zusammenwirkt. Die Steuerkante 15 befindet sich dabei im Bereich von mit dem Vorratsbehälter 8 in Verbindung stehenden Abströmbohrungen 19. In seinem oberen Teil ist der Hauptschieber 16 offen ausgebildet und mit mehreren an seinem Umfang regelmäßig verteilten radialen Bohrungen 20 versehen, die beim Öffnen des Hauptventils 12 mit den Abströmbohrungen 19 in Verbindung gebracht werden. In seiner Ruhelage liegt der Hauptschieber 16 unter der Wirkung einer ersten Druckfeder 21 mittels axialer Vorsprünge 22 am Ende des Zentralrohres 9 an, und begrenzt im Ventilgehäuse 14 eine hydraulische Kammer 24, die über Drosselbohrungen 23 mit dem Inneren des Zentralrohres 9 verbunden ist. Die hydraulische Kammer 24 wird nach unten durch einen im Hauptschieber 16 axial verschiebbar geführten Steuerschieber 18 begrenzt, der mit im Bereich der Abströmbohrungen 19 im Hauptschieber 16 ausgebildeten, radial verlaufenden Steuerbohrungen 17 zusammenwirkt und unter Vorspannung einer koaxial zur ersten Druckfeder 21 angeordneten zweiten Druckfeder 25 am Hauptschieber 16 anliegt. Der Steuerschieber 18 ist mittels einer elektromagnetischen Betätigungseinheit betätigbar, die aus einer Tauchspule 26 sowie einem Permanetmagneten 30 besteht, die in einem Magnetgestell 69 aus magnetisch leitendem Material, beispielsweise Eisen, angeordnet sind. Das aus einem zylindrischen Mittelbereich 76 des Ventilgehäuses 14 sowie einem topfförmigen Abschirmkäfig 77 bestehende Magnetgestell 69 ist dabei so gestaltet, daß sein magnetflußführender Bereich als Hohlring ausgebildet ist, so daß der magnetische Kraftfluß des darin angeordneten, radial polarisierten Permanentmagneten 30 in zwei gleiche, zueinander entgegengesetzt verlaufende Teilflüsse geteilt wird. Durch diese Maßnahmen brauchen die Wandstärken der Teile 76,77 nur für die halbe Flußdichte ausgelegt zu sein. Wie der Zeichnung weiter zu entnehmen ist, weist der zylindrische Mittelbereich 76 des Ventilgehäuses 14 in seinem unteren Teil Führungsschlitze 70 auf, die der Führung eines aus magnetisch nicht leitendem Matieral bestehenden Tauchspulenträgers 27 dienen. Der ringförmige Permanentmagnet 30 ist dabei auf dem Mittelbereich 76 des Ventilgehäuses 14 befestigt und mittels eines ringförmigen Stützkörpers 78 axial fixiert, wobei die Tauchspule 26 in einem Arbeitsluftspalt axial bewegbar angeordnet ist, der zwischen der Wandung des Abschirmkäfigs 77 und dem Permanentmagneten 30 ausgebildet ist.

Am Tauchspulenträger 27 ist dabei ein Fesselungselement 28 befestigt, mit desen Hilfe der Steuerschieber 18 an der Tauchspule 26 gefesselt ist und das einen Kopf 29 aufweist, der im Ruhezustand von unten am Hauptschieber 16 anliegt. Unterhalb des Tauchspulenträgers 27 begrenzt der Abschirmkäfig 77 einen mit Öl gefüllten hydraulischer Raum 31, der über seitlich axial verlaufende Kanäle 63 mit dem Vorratsbehälter 8 in Verbindung steht.

Um die beabsichtigte Funktion des erfindungsgemäßen Zweirohr-Stoßdämpfers zu gewährleisten muß die Tauchspule 26 der elektromagnetischen Betätigungseinheit bestromt werden. Die entstehende elektromagnetische Stellkraft bewirkt eine Bewegung des Steuerschiebers 18 nach unten, so daß eine Verbindung zwischen dem Vorratsbehälter 8 und dem Inneren des Zentralrohres 9 hergestellt wird. Bewegt sich nun der Kolben 3 in der sogenannten Zugstufe nach oben, so wird der in der Arbeitskammer 5 herrschende Druck höher als der Druck in der unterhalb des Kolbes 3 liegenden Arbeitskammer 6, während das erste Rückschlagventil 4 geschlossen bleibt. Dabei erfolgt ein Verdrängen des Öls aus der Kammer 5 durch die hohle Kolbenstange 2 ins Innere des Zentralrohres 9 und über das offene Dämpferventil 10 in den Ringraum 44. Vom Ringraum 44 strömt das Öl über Bohrungen bzw. Kanäle 61 im scheibenförmigen Teil 38 des zweites Rückschlagventils 13 in die unterhalb des Kolbens 3 liegende Arbeitskammer 6, die gleichzeitig aus dem Vorratsbehälter 8 nachgefüllt wird.

Bei einer Bewegung des Kolbens 3 nach unten in der sogenannten Druckstufe wird der in der unterhalb des Kolbens 3 liegenden Arbeitskammer 6 herrschende Druck höher als der Druck in der oberen Arbeitskammer 5, so daß das erste Rückschlagventil 4 geöffnet wird. Der aus der Arbeitskammer 6 austretende Volumenstrom wird geteilt, und zwar in einen ersten Teilstrom, der über das offene erste Rückschlagventil 4 direkt in die oberhalb des Kolbens 3 liegende Arbeitskammer 5 fließt, und einen zweiten Teilstrom, der durch die hohle Kolbenstange 2, das Zentralrohr 9 und das offene Dämpferventil 10 in den Vorratsbehällter 8 strömt.

Im Betrieb des erfindungsgemäßen Zweirohr-Stoßdämpfers wird zwischen zwei Betriebszuständen des Dämpferventils 10 unterschieden. Im ersten Betriebszustand, der einem unteren Kolbengeschwindigkeitsbereich entspricht, in dem niedrige Drücke und kleine Volumenströme auftreten, arbeitet das Dämpferventil 10 als einstufiges Schieberventil, dessen elektromagnetische Ansteuerung den Öffnungsgrad der Vorsteuerstufe 11 bestimmt.

Im zweiten Betriebszustand, der einem oberen Kolbengeschwindigkeitsbereich entspricht, in dem höhere Drücke und größere Volumenströme auftreten, wird der Steuerschieber 18 genauso wie im ersten Betriebszustand durch Bestromen der Tauchspule 26 positioniert, wobei seine Lage durch ein Gleichgewicht zwischen der Kraft der zweiten Druckfeder 25, der Stellkraft der Tauchspule 26, der aus der Druckdifferenz zwischen dem innerhalb des Hauptschiebers 16 herrschenden Druck und dem Vorratsbehälterdruck resultierenden, auf das Fesselungselement 28 wirkenden Kraft sowie den im Mündungsbereich der Steuerbohrungen 17 auftretenden hydrodynamischen Strömungskräften vorgegeben wird. Sind die Steuerbohrungen 17 geschlossen, so ist der innerhalb des Hauptschiebers 16 herrschende Druck gleich dem Systemdruck, so daß das Hauptventil 12 durch die Kraft der ersten Druckfeder 21 geschlossen bleibt. Werden die Steuerbohrungen 17 freigegeben, so entsteht durch einen Ölstrom durch die Drosselbohrungen 23 am Hauptschieber 16 eine Druckdifferenz, deren Wirkung auf die Stirnfläche des Hauptschiebers 16 eine Kraft wirksam werden läßt, die die Federkraft der ersten Druckfeder 21 überwindet, so daß eine Bewegung des Hauptschiebers 16 nach unten erfolgt und die Steuerkante 15 bzw. die Abströmbohrungen 19 freigegeben werden. Die gerade erwähnte Bewegung des Hauptschiebers 16 hat ein teilweises Schließen der Steuerbohrungen 17 zur Folge, so daß der durch die Drosselbohrungen 23 fließende Volumenstrom abnimmt und die auf den Hauptschieber 16 einwirkende Druckdifferenz verringert wird. Dieser Regelprozeß dauert so lange, bis die Federkraft der ersten Druckfeder 21 die aus der Druckdifferenz resultierende Kraft überwindet und das Hauptventil 12 schließt. Durch diesen Mechanismus ist die Lage des Hauptventils 12 an die Lage des Vorsteuerventils 11 hydraulisch gekoppelt, wobei die zur Bewegung des Hauptschiebers 16 benötigte Stellenergie der zu drosselnden Strömung entnommen wird. Im oberen Kolbengeschwindigkeitsbereich arbeitet das Dämpferventil 10 als zweistufiges Druckbegrenzungsventil, wobei die elektromagnetische Ansteuerung die Höhe des Differenzdruckes am Hauptschieber 16 bestimmt.

Durch die geeignete Dimensionierung der Bauteile kann die Art des kontinuierlichen Übergangs zwischen diesen Arbeitsbereichen gestaltet werden und es können nahezu beliebige Kennlinienscharen als Dämpferventilcharakteristik erzeugt werden. Insbesondere ist dadurch ein weiches Anlaufen der Ventilkennlinien im unteren Arbeitsbereich möglich, was bei Anwendung in steuerbaren Fahrzeugdämpfern einer komfortbetonten Dämpferstellung entspricht. Im oberen Arbeitsbereich wird die Degressivität der Kennlinien im Wesentlichen durch die Querschnittsfläche des Fesselungselementes 28 an dessen Durchtrittsstelle im Ventilgehäuse 14 bestimmt.

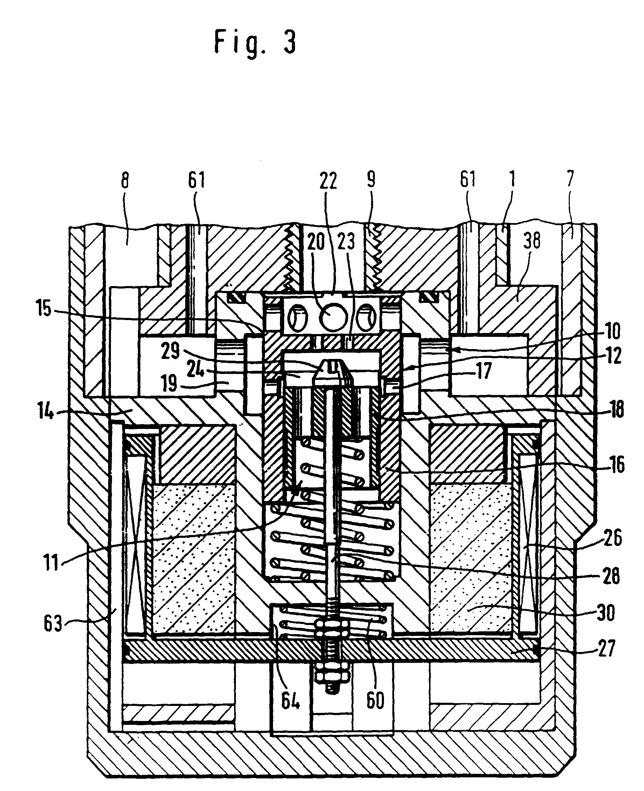

Bei der in Fig. 3 gezeigten zweiten Ausführungsvariante der Erfindung ist im Ruhezustand des Stoßdämpfers eine Zwischenlage des Steuerschiebers 18 vorgesehen, in der die Steuerbohrungen 17 teilweise vom Steuerschieber 18 verdeckt sind. Diese Zwischenlage wird erfindungsgemäß durch die Wirkung einer dritten Druckfeder 60 erreicht, die der den Steuerschieber 18 in Schließrichtung vorspannenden zweiten Druckfeder 25 entgegenwirkt und in einer im Ventilgehäuse 14 ausgebildeten zylindrischen Ausnehmung 64 koaxial zum Fesselungselement 28 so angeordnet ist, daß sie sich am Tauchspulenträger 27 abstützt.

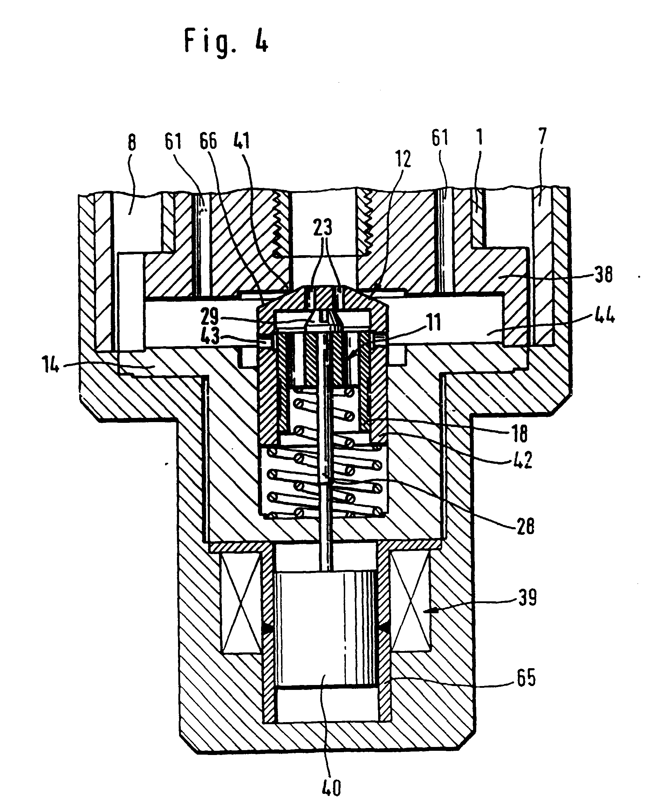

Bei der in Fig. 4 dargestellten dritten Ausführungsform des erfindungsgemäßen Zweirohr-Stoßdämpfers erfolgt die Betätigung des Vorsteuerventils 11 mittels eines Proportionalmagneten 39, dessen Anker 40 in einem rohrförmigen Spulenträger 65 verschiebbar geführt und durch das Fesselungselement 28 mit dem Steuerschieber 18 verbunden ist. Das Hauptventil 12 weist dabei vorzugsweise einen mit zwei Drosselbohrungen 23 sowie mehreren Steuerbohrungen 43 versehenen Ventilkolben 42 auf, dessen konische Dichtfläche 66 mit einem am scheibenförmigen Teil 38 des zweiten Rückschlagventils 13 ausgebildeten ringförmigen Dichtsitz 41 zusammenwirkt. Durch die Verwendung des Proportionalmagneten 39 wird ein günstiges Leistungsgewicht des Vorsteuerventils 11, d.h. das Verhältnis der maximalen Magnetkraft zum Gewicht der Betätigungseinheit, erreicht, während das als Sitzventil ausgebildete Hauptventil 12 fast leckagefrei arbeitet.

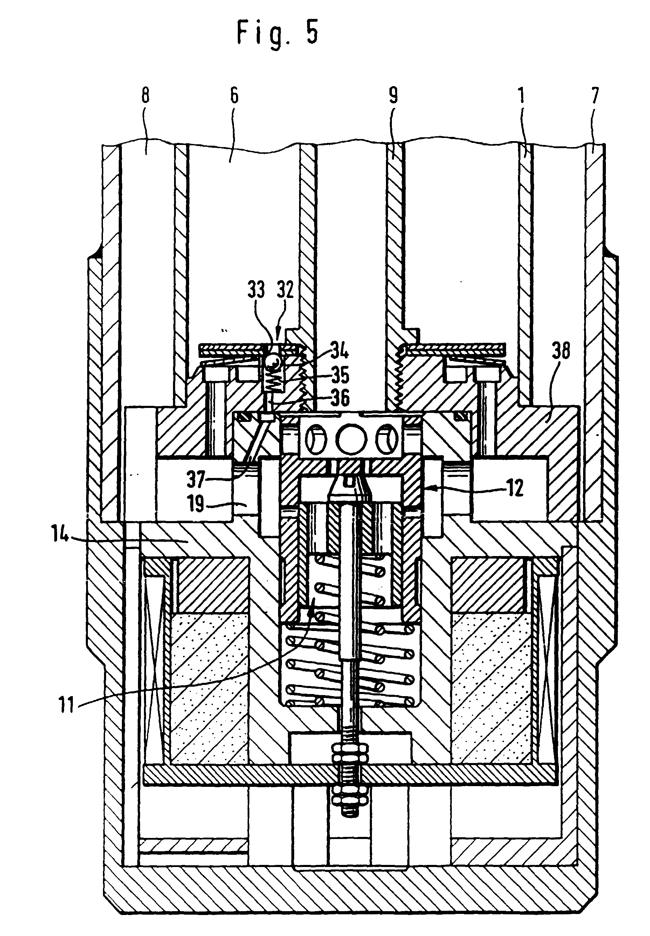

Um bei einem Ausfall bzw. einer Fehlsteuerung des Dämpferventils 10 in der Druckstufe unzulässig hohe Dämpfungskräfte zu eliminieren, ist bei der in Fig. 5 gezeigten Ausführung parallel zum Haupt- (12) bzw. Vorsteuerventil 11 ein nicht steuerbares Ventil 32, vorzugsweise ein Rückschlagventil, vorgesehen, das bei Überschreiten des zulässigen Systemdruckes eine Verbindung zwischen der unterhalb des Kolbens 3 liegenden Arbeitskammer 6 und dem Vorratsbehälter 8 öffnet. Das Ventil 32 ist dabei vorzugsweise im scheibenförmigen Teil 38 des zweiten Rückschlagventils 13 angeordnet und besteht aus einer mittels einer Feder 35 vorgespannten Kugel 34 sowie einem mit der Kugel 34 zusammenwirkenden ringförmigen Dichtsitz 33. Die Verbindung ist durch Bohrungen 36,37 im scheibenförmigen Teil 38 bzw. dem Ventilgehäuse 14 gebildet, wobei die letztgenannte Bohrung 37 in einer der Abströmbohrungen 19 mündet.

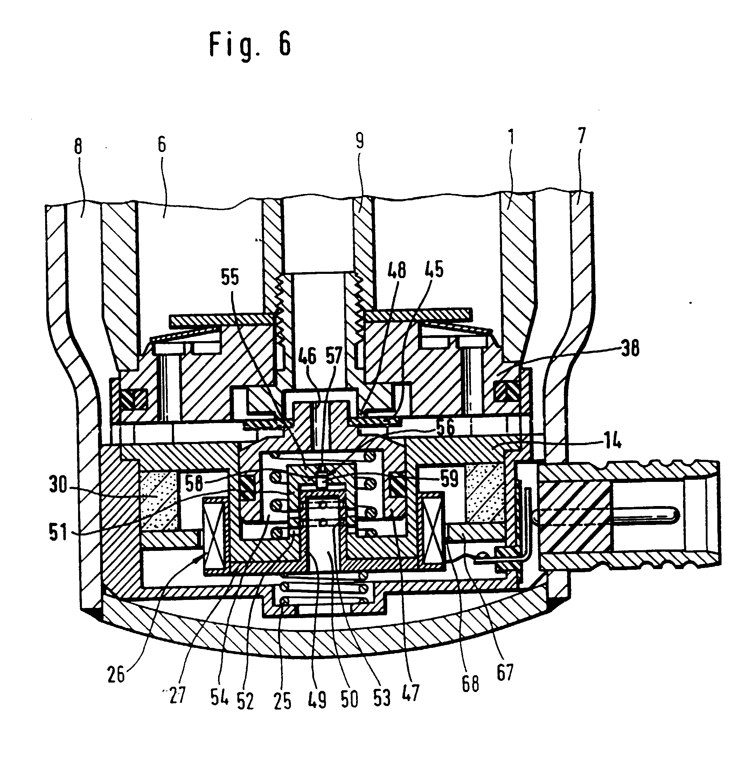

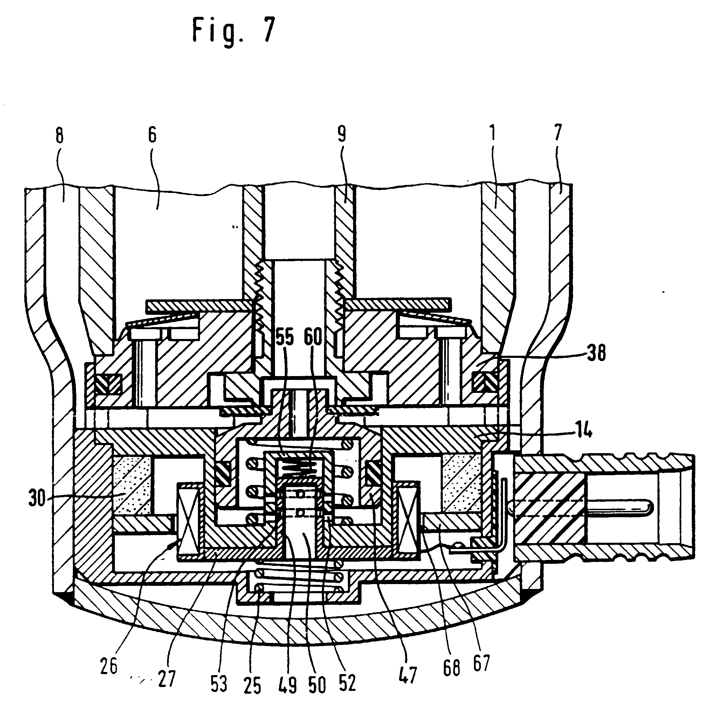

Bei dem in Fig. 6 und 7 gezeigten Ausführungsbeispielen der Erfindung ist die Betätigungseinheit des Vorsteuerventils ähnlich wie bei der Ausführung nach Fig. 1 und 2 durch eine Tauchspule 26 gebildet, die mit einem radial außen angeordneten Permantmagneten 30 zusammenwirkt. Das zweiteilig ausgebildete Ventilgehäuse 14 weist in seinem Inneren eine ringförmige Platte 67 auf, die einerseits am Permantmagneten 30 anliegt und andererseits eine zentral angeordnete Öffnung 68 aufweist, die die Tauchspule 26 aufnimmt. Der Steuerschieber 49 der Vorsteuerstufe ist dabei vorzugsweise durch einen mittleren zylindrischen Bereich des Tauchspulenträgers 27 gebildet, der in einer axial verlaufenden zylindrischen Wand 51 des Ventilgehäuses 14 geführt wird, die einen mit dem Vorratsbehälter 8 in ständiger Verbindung stehenden hydraulischen Raum 50 begrenzt und mit radialen Bohrungen 52 versehen ist. Die Bohrungen 52 wirken mit im Steuerschieber 49 ausgebildeten Steuerbohrungen 53 zusammen und ermöglichen eine Verbindung zwischen dem Raum 50 und einer im Ventilgehäuse 14 ausgebildeten Kammer 54, die durch einen im Ventilgehäuse 14 abgedichtet axial verschiebbar geführten Kolben 47 begrenzt ist. Der Raum 50 ist oben durch eine die zylindrische Wand 51 schließende, waagerecht verlaufene Wand 55 begrenzt, die eine Stufenbohrung 56 aufweist. Die Stufenbohrung 56 ist dabei vorzugsweise derart ausgebildet, daß ein Abschnitt 57 kleineren Durchmessers in der Kammer 54 mündet, während ein im Raum 50 mündender Abschnitt 58 ein zylindrisches Druckstück 59 verschiebbar aufnimmt, das von oben am Steuerschieber 49 anliegt. Der vorhin erwähnte Kolben 47 trägt an seinem oberen Ende eine kreisförmige Ventilschließplatte 45, die mit einem im scheibenförmigen Teil 38 ausgebildeten Dichtsitz 48 zusammenwirkt. Außerdem ist der Kolben 47 mit einer axial verlaufenden Bohrung 46 versehen, die eine Verbindung zwischen dem Inneren des Zentralrohres 9 und der hydraulischen Kammer 54 bildet. Beide Figuren 6 und 7 lassen erkennen, daß der Kolben 47 mit der Ventilschließplatte 45 und der Dichtsitz 48 das im vorstehenden Text erwähnte Hauptventil des Dämpferventils bilden. Das Druckstück 59 ermöglicht dabei bei einer Stellkraft = 0 ein teilweises Öffnen des Dämpferventils bzw. dessen Vorsteuerventils.

Die in Fig. 7 gezeigte Ausführung entspricht weitgehend der Variante, die im Zusammenhang mit Fig. 6 beschrieben wurde. Die Vorsteuerstufe dieser Ausführung befindet sich jedoch im Ruhezustand in einer Zwischenstellung, in der ein teilweises Überlappen der Öffnungsbereiche im Steuerschieber 49 und in der zylindrischen Wand 51 stattfindet, so daß das Dämpferventil teilweise geöffnet ist. Die im Zusammenhang mit Fig. 3 erwähnte dritte Druckfeder 60 befindet sich bei dieser Ausführung zwischen der waagerechten Wand 55 und dem Steuerschieber 49.

### Bezugszeichenliste

- 1: Arbeitszylinder
- 2: Kolbenstange
- 3: Kolben
- 4: Rückschlagventil
- 5: Arbeitskammer
- 6: Arbeitskammer
- 7: Außenrohr
- 8: Vorratsbehälter
- 9: Zentralrohr
- 10: Dämpferventil
- 11: Vorsteuerventil
- 12: Hauptventil
- 13: Rückschlagventil
- 14: Ventilgehäuse
- 15: Steuerkante
- 16: Hauptschieber
- 17: Steuerbohrung
- 18: Steuerschieber
- 19: Abströmbohrung
- 20: Bohrung
- 21: Druckfeder
- 22: Vorsprung
- 23: Drosselbohrung
- 24: Kammer
- 25: Druckfeder
- 26: Tauchspule
- 27: Träger
- 28: Fesselungselement
- 29: Kopf
- 30: Permanentmagnet
- 31: Raum
- 32: Ventil
- 33: Dichtsitz
- 34: Kugel
- 35: Feder
- 36: Bohrung
- 37: Bohrung
- 38: Teil
- 39: Proportionalmagnet
- 40: Anker
- 41: Dichtsitz
- 42: Ventilkolben
- 43: Steuerbohrung
- 44: Ringraum
- 45: Ventilschließplatte
- 46: Bohrung
- 47: Kolben
- 48: Dichtsitz
- 49: Steuerschieber
- 50: Raum
- 51: Wand
- 52: Bohrung
- 53: Steuerbohrung
- 54: Kammer
- 55: Wand
- 56: Stufenbohrung
- 57: Abschnitt
- 58: Abschnitt
- 59: Druckstück
- 60: Druckfeder
- 61: Kanal
- 62: Federscheibe
- 63: Kanal
- 64: Ausnehmung
- 65: Spulenträger
- 66: Dichtfläche
- 67: Platte
- 68: Öffnung
- 69: Magnetgestell
- 70: Führungsschlitz
- 71: Tauchspule
- 72: Spulenträger
- 73: Führungsstift
- 74: Spulenkörper
- 75: Öffnung
- 76: Mittelbereich
- 77: Abschirmkäfig
- 78: Stützkörper
- 79: Spule

## Patentansprüche

1. Zweirohr-Stoßdämpfer mit regelbarer variabler Dämpfungskraft für Kraftfahrzeuge, bestehend aus einem Arbeitszylinder (1), dessen Innenraum mittels eines durch eine Kolbenstange (2) verschiebbaren Kolbens (3) in eine erste sowie eine zweite Arbeitskammer (5,6) unterteilt ist, einem teilweise mit Öl gefüllten Vorratsbehälter (8), mit hydraulischen Verbindungen, die einen Volumenausgleich zwischen den Arbeitskammern (5,6) und dem Vorratsbehälter (8) ermöglichen, mit einem ersten und einem zweiten Rückschlagventil (4,13) sowie einem Dämpferventil (10) zur Änderung des Durchflußquerschnitts einer der hydraulischen Verbindungen, das durch ein Vorsteuerventil (11) und ein Hauptventil (12), die parallel zueinander geschaltet sind, gebildet ist, dadurch **gekennzeichnet,** daß die Dämpfungskraft in einem unteren Kolbengeschwindigkeitsbereich lediglich durch den veränderbaren Durchflußquerschnitt des Vorsteuerventils (11) bestimmt wird, während das Hauptventil (12) geschlossen bleibt, und daß die Dämpfungskraft in einem oberen Kolbengeschwindigkeitsbereich durch die veränderbaren Durchflußquerschnitte des Haupt-(12) sowie des Vorsteuerventils (11) bestimmt wird.

2. Zweirohr-Stoßdämpfer nach Anspruch 1, dadurch **gekennzeichnet,** daß das Hauptventil (12) im oberen Kolbengeschwindigkeitsbereich der Position des Vorsteuerventils (11) folgt.

3. Zweirohr-Stoßdämpfer nach Anspruch 2, dadurch **gekennzeichnet,** daß das Hauptventil (12) sowie das Vorsteuerventil (11) getrennt vom zweiten Rückschlagventil (13) in einem Ventilgehäuse (14) angeordnet sind, wobei das Hauptventil (12) durch einen mit einer im Ventilgehäuse (14) ausgebildeten Steuerkante (15) zusammenwirkenden Hauptschieber (16) und das Vorsteuerventil (11) durch einen elektromagnetisch betätigbaren, mit im Hauptschieber (16) ausgebildeten Steuerbohrungen (17) zusammenwirkenden Steuerschieber (18) gebildet sind.

4. Zweirohr-Stoßdämpfer nach Anspruch 3, dadurch **gekennzeichnet,** daß die Steuerkante (15) im Bereich von im Ventilgehäuse (14) ausgebildeten, mit dem Vorratsbehälter (8) in Verbindung stehenden Abströmbohrungen (19) angeordnet ist.

5. Zweirohr-Stoßdämpfer nach Anspruch 4, dadurch **gekennzeichnet,** daß der Hauptschieber (16) in seinem oberen Teil offen ausgebildet und mit Bohrungen (20) versehen ist, die mit den Abströmbohrungen (19) in Verbindung bringbar sind.

6. Zweirohr-Stoßdämpfer nach einem der Ansprüche 3 bis 5, dadurch **gekennzeichnet,** daß der Hauptschieber (16) mittels einer ersten Druckfeder (21) in Schließrichtung des Hauptventils (12) vorgespannt ist und im Ruhezustand an einem Anschlag anliegt.

7. Zweirohr-Stoßdämpfer nach Anspruch 6, dadurch **gekennzeichnet,** daß die Anlage des Hauptschiebers (16) am Anschlag mittels axialer Vorsprünge (22) erfolgt.

8. Zweirohr-Stoßdämpfer nach einem der Ansprüche 3 bis 7, dadurch **gekennzeichnet,** daß der Hauptschieber (16) mit Drosselbohrungen (23) versehen ist, die in einer durch den Hauptschieber (16) im Ventilgehäuse (14) begrenzten hydraulischen Kammer (24) münden.

9. Zweirohr-Stoßdämpfer nach Anspruch 3, dadurch **gekennzeichnet,** daß der Steuerschieber (18) im Hauptschieber (16) geführt ist und im Ruhezustand unter Vorspannung einer zweiten Druckfeder (25) an diesem anliegt.

10. Zweirohr-Stoßdämpfer nach Anspruch 3, dadurch **gekennzeichnet,** daß das Vorsteuerventil (11) durch eine mit einem Permamentmagneten (30) zusammenwirkende Tauchspule (26) elektromagnetisch betätigbar ist, und der Steuerschieber (18) am Tauchspulenträger (27) mittels eines Fesselungselementes (28) gefesselt ist, dessen Kopf (29) im Ruhezustand am Hauptschieber (16) anliegt.

11. Zweirohr-Stoßdämpfer nach Anspruch 10, dadurch **gekennzeichnet,** daß die aus Tauchspule (26) und Permanentmagneten (30) bestehende Betätigungseinheit in einem mit dem Vorratsbehälter (8) in Verbindung stehenden hydraulischen Raum (31) angeordnet ist, so daß das am Tauchspulenträger (27) befestigte Ende des Fesselungselementes (28) der Wirkung des im Vorratsbehälter (8) herrschenden Druckes ausgesetzt ist.

12. Zweirohr-Stoßdämpfer nach einem der vorhergehenden Ansprüche, dadurch **gekennzeichnet,** daß parallel zum Haupt- (12) bzw. Vorsteuerventil (11) ein nicht steuerbares Ventil (32) vorgesehen ist, das lediglich in der Druckstufe des Stoßdämpfers wirksam ist.

13. Zweirohr-Stoßdämpfer nach Anspruch 12, dadurch **gekennzeichnet,** daß das Ventil (32) im Bereich des zweiten Rückschlagventils (13) ausgebildet ist und durch eine mit einem Ventilsitz (33) zusammenwirkende, durch eine Feder (35) vorgespannte Kugel (34) gebildet ist.

14. Zweirohr-Stoßdämpfer nach Anspruch 12 oder 13, dadurch **gekennzeichnet,** daß das Ventil (32) in einer Verbindung zwischen der zweiten Kammer (6) und dem Vorratsbehälter (8) angeordnet ist, die durch Bohrungen (36,37) in einem scheibenförmigen Teil (38) des zweiten Rückschlagventils (13) bzw. dem Ventilgehäuse (14) gebildet ist, wobei die im Ventilgehäuse (14) vorgesehene Bohrung (37 ) in einer der Abströmbohrungen (19) mündet.

15. Zweirohr-Stoßdämpfer nach einem der Ansprüche 3 bis 9, dadurch **gekennzeichnet,** daß dessen Vorsteuerventil (11) elektromagnetisch betätigbar ist, und die elektromagnetische Betätigung mittels eines Proportionalmagneten (39) erfolgt, dessen Anker (40) mit dem Steuerschieber (18) mittels eines Fesselungselementes (28) verbunden ist, dessen Kopf (29) im Ruhezustand am Hauptschieber (16) anliegt.

16. Zweirohr-Stoßdämpfer nach Anspruch 1 oder 2, dadurch **gekennzeichnet,** daß das Hauptventil (12) sowie das Vorsteuerventil (11) getrennt vom zweiten Rückschlagventil (13) in einem Ventilgehäuse (14) angeordnet sind, wobei das Hauptventil (12) durch einen mit einem an einem scheibenförmigen Teil (38) des zweiten Rückschlagventils (13) ausgebildeten Dichtsitz (41) zusammenwirkenden Ventilkolben (42) und das Vorsteuerventil (11) durch einen elektromagnetisch betätigbaren, mit im Ventilkolben (42) ausgebildeten Steuerbohrungen (43) zusammenwirkenden Steuerschieber (18) gebildet sind.

17. Zweirohr-Stoßdämpfer nach Anspruch 16, dadurch **gekennzeichnet,** daß das scheibenförmige Teil (38) mit dem Ventilgehäuse (14) einen hydraulischen Ringraum (44) begrenzt, in den der Ventilkolben (42) hineinragt und der mit dem Vorratsbehälter (8) in Verbindung steht.

18. Zweirohr-Stoßdämpfer nach Anspruch 17, dadurch **gekennzeichnet,** daß die Steuerbohrungen (43) im Ringraum (44) münden.

19. Zweirohr-Stoßdämpfer nach Anspruch 1, dadurch **gekennzeichnet,** daß das Hauptventil (12) sowie das Vorsteuerventil (11) getrennt vom zweiten Rückschlagventil (13) in einem Ventilgehäuse (14) angeordnet sind, wobei das Hauptventil (12) durch einen im Ventilgehäuse (14) abgedichtet geführten, eine Ventilschließplatte (45) tragenden, eine axiale Bohrung (46) aufweisenden Kolben (47) sowie einen durch die Ventilschließplatte (45) absperrbaren bzw. freigebbaren, an einem scheibenförmigen Teil (38) des zweiten Rückschlagventils (13) ausgebildeten Dichtsitz (48) gebildet ist, während das Vorsteuerventil (11) durch einen im Ventilgehäuse (14 ) ausgebildeten zylindrischen, einen in Schließrichtung federnd vorgespannten Steuerschieber (49) aufnehmenden Raum (50) gebildet ist, dessen axial verlaufende zylindrische Wand (51) radiale Bohrungen (52) aufweist, die mit im Steuerschieber (49) ausgebildeten Steuerbohrungen (53) zusammenwirken und eine hydraulische Verbindung einer durch den Kolben (47) im Ventilgehäuse (14) begrenzten Kammer (54) mit dem Vorratsbehälter (8) ermöglichen.

20. Zweirohr-Stoßdämpfer nach Anspruch 19, dadurch **gekennzeichnet,** daß das Vorsteuerventil (11) elektromagnetisch betätigbar ist, wobei der Steuerschieber (49) einteilig mit dem Träger (27) einer zur elektromagnetischen Betätigungseinrichtung gehörenden Tauchspule (26) ausgebildet ist.

21. Zweirohr-Stoßdämpfer nach Anspruch 19 oder 20, dadurch **gekennzeichnet,** daß eine den zylindrischen Raum (50) begrenzende, waagerecht verlaufende Wand (55) vorgesehen ist, die eine Stufenbohrung (56) aufweist, deren Abschnitt (57) kleineren Durchmessers in der Kammer (54) mündet und deren Abschnitt (58) größeren Durchmesssers ein axial verschiebbares Druckstück (59) aufnimmt, das mit der Stirnfläche des Steuerschiebers (49) zusammenwirkt.

22. Zweirohr-Stoßdämpfer nach einem der Ansprüche 3 bis 21, dadurch **gekennzeichnet,** daß eine Zwischenstellung des Steuerschiebers (49) im Ruhezustand vorgesehen ist, in der eine teilweise Verbindung zwischen der durch den Hauptschieber (16) bzw. Kolben (47) im Ventilgehäuse (14) begrenzten Kammer (24 bzw. 54) und dem Vorratsbehälter (8) besteht.

23. Zweirohr-Stoßdämpfer nach einem der Ansprüche 9 bis 22, dadurch **gekennzeichnet,** daß die Zwischenstellung des Steuerschiebers (18,49) durch eine dritte Druckfeder (60) erreicht ist, die der den Steuerschieber (18,49) vorspannenden zweiten Druckfeder (25) entgegenwirkt.

24. Zweirohr-Stoßdämpfer nach den Ansprüchen 19 und 23, dadurch **gekennzeichnet,** daß die dritte Druckfeder (60) an der waagerechten, den zylindrischen Raum (50) begrenzenden Wand (55) abgestützt ist.

25. Zweirohr-Stoßdämpfer nach Anspruch 23 in Verbindung mit Anspruch 10, dadurch **gekennzeichnet,** daß die dritte Druckfeder (60) zwischen dem Ventilgehäuse (14) und dem Tauchspulenträger (27) eingespannt ist.

26. Zweirohr-Stoßdämpfer nach Anspruch 25, dadurch **gekennzeichnet,** daß die dritte Druckfeder (60) in einer zylindrischen Ausnehmung (64) im Ventilgehäuse (14) angeordnet ist.

27. Zweirohr-Stoßdämpfer nach Anspruch 1, dadurch **gekennzeichnet,** daß die Funktionsweise des Dämpferventils (10) im unteren Kolbengeschwindigkeitsbereich der Funktionsweise eines einstufigen Schieberventils entspricht, dessen elektromagnetische Ansteuerung den Öffnungsgrad des Vorsteuerventils (11) bestimmt.

28. Zweirohr-Stoßdämpfer nach Anspruch 3, dadurch **gekennzeichnet,** daß die Funktionsweise des Dämpferventils (10) im oberen Kolbengeschwindigkeitsbereich der Funktionsweise eines zweistufigen Druckbegrenzungsventils entspricht, wobei die elektromagnetische Ansteuerung des Vorsteuerventils (11) die Höhe des Differenzdruckes am Hauptschieber (16) bestimmt.

## Claims

1. A two-tube shock absorber with controllable variable shock absorbing power for automotive vehicles, comprising: a power cylinder (1) having its interior space subdivided into a first and a second power chamber (5, 6) by a piston (3) that is slidable by a piston rod (2), a storage tank (8) that is partly filled with oil, hydraulic connections which permit a compensation of volume between the power chambers (5, 6) and the storage tank (8), a first and a second non-return valve (4, 13) and a shock absorber valve (10) providing the variation of the cross-sectional area of flow of one of the hydraulic connections, said valves including a pilot control valve (11) and a main valve (12) connected in parallel to each other,
**characterized** in that the shock absorbing power is exclusively determined by the variable flow cross-sectional area of the pilot control valve (11) in a lower range of piston speed, the main valve (12) remaining closed, and in that the shock absorbing power is determined by the variable flow cross-sectional areas of the main valve (12) and the pilot control valve (11) in an upper range of piston speed.

2. A two-tube shock absorber as claimed in claim 1,
**characterized** in that the main valve (12) follows the position of the pilot control valve (11) in the upper range of piston speed.

3. A two-tube shock absorber as claimed in claim 2,
**characterized** in that the main valve (12) and the pilot control valve (11) are arranged so as to be separate from the second non-return valve (13) in a valve housing (14), the main valve (12) including a main slide valve (16) interacting with a control edge (15) which is provided within the valve housing (14), and the pilot control valve (11) including an electromagnetically actuatable control slide valve (18) interacting with control bores (17) which are provided in the main slide valve (16).

4. A two-tube shock absorber as claimed in claim 3,
**characterized** in that the control edge (15) is positioned proximate flow-off bores (19) which are provided in the valve housing (14) and are connected to the storage tank (8).

5. A two-tube shock absorber as claimed in claim 4,
**characterized** in that the main slide valve (16) is open in its upper part and has bores (20) which can be connected to the flow-off bores (19).

6. A two-tube shock absorber as claimed in anyone of claims 3 to 5,
**characterized** in that the main slide valve (16) is biassed in the closing direction of the main valve (12) by means of a first compression spring (21) and is in abutment against a stop in a condition of rest.

7. A two-tube shock absorber as claimed in claim 6,
**characterized** in that the main slide valve (16) abuts on the stop by means of axial projections (22).

8. A two-tube shock absorber as claimed in anyone of claims 3 to 7,
**characterized** in that the main slide valve (16) includes restricting bores (23) which end up in a hydraulic chamber (24) that is defined within the valve housing (14) by the main slide valve (16).

9. A two-tube shock absorber as claimed in claim 3,
**characterized** in that the control slide valve (18) is guided in the main slide valve (16) and in the condition of rest is abutted against it under the prestressing action provided by a second compression spring (25).

10. A two-tube shock absorber as claimed in claim 3,
**characterized** in that the pilot control valve (11) is actuatable electromagnetically by a plunger coil (26) which interacts with a permanent magnet (30), and the control slide valve (18) is captivated to the plunger coil support (27) by means of a captivating element (28) whose head (29) is in abutment against the main slide valve (16) in the condition of rest.

11. A two-tube shock absorber as claimed in claim 10,
**characterized** in that the actuating unit comprised of the plunger coil (26) and the permanent magnet (30) is positioned in a hydraulic chamber (31) which is in connection with the storage tank (8), so that the end of the captivating element (28) is fixed to the plunger coil support (27) and is subject to the pressure existing within the storage tank (8).

12. A two-tube shock absorber as claimed in anyone of the preceding claims,
**characterized** in that in parallel to the main valve (12) or the pilot control valve (11), a non-controllable valve (32) is provided which is active exclusively in the thrust stage of the shock absorber.

13. A two-tube shock absorber as claimed in claim 12,
**characterized** in that the valve (32) is provided proximate the second non-return valve (13) and is formed by a ball (34) which interacts with a valve seat (33) and is prestressed by a spring (35).

14. A two-tube shock absorber as claimed in claim 12 or in claim 13,
**characterized** in that the valve (32) is arranged in a connection between the second chamber (6) and the storage tank (8) which is formed by bores (36, 37) in a disc-shaped element (38) of the second non-return valve (13), or in the valve housing (14), the bore (37) provided in the valve housing (14) ending up in one of the flow-off bores (19).

15. A two-tube shock absorber as claimed in anyone of claims 3 to 9,
**characterized** in that its pilot control valve (11) is actuatable electromagnetically and the electromagnetic actuation is effected by a proportional magnet (39) wherein the armature (40) is connected to the control slide valve (18) by means of a captivating element (28) whose head (29) is abutted against the main slide valve (16) in the condition of rest.

16. A two-tube shock absorber as claimed in claim 1 or in claim 2,
**characterized** in that the main valve (12) and the pilot control valve (11) are arranged within a valve housing (14) so as to be separate from the second non-return valve (13), the main valve (12) being comprised of a valve piston (42) interacting with a sealing seat (41) which is configured at a disc-shaped element (38) of the second non-return valve (13), and the pilot control valve (11) being comprised of an electromagnetically actuatable control slide valve (18) interacting with control bores (43) which are provided in the valve piston (42).

17. A two-tube shock absorber as claimed in claim 16,
**characterized** in that the disc-shaped element (38) jointly with the valve housing (14) defines a hydraulic annular chamber (44) into which the valve piston (42) projects and which is in connection with the storage tank (8).

18. A two-tube shock absorber as claimed in claim 17,
**characterized** in that the control bores (43) connect with the annular chamber (44).

19. A two-tube shock absorber as claimed in claim 1,
**characterized** in that the main valve (12) and the pilot control valve (11) are positioned within a valve housing (14) so as to be separate from the second non-return valve (13), the main valve (12) including a piston (47) which is sealedly guided within the valve housing (14), which bears a valve closing plate (45) and has an axial bore (46), and including a sealing seat (48) which can be shut off and opened by the valve closing plate (45) and is provided at a disc-shaped element (38) of the second non-return valve (13), and the pilot control valve (11) including a cylindrical chamber (50) which is provided in the valve housing (14), which accommodates a control slide valve (49) that is elastically prestressed in the closing direction wherein an axially extending cylindrical wall (51) has radial bores (52) interacting with control bores (53) in the control slide valve (49) to permit a hydraulic connection between a chamber (54), that is defined by the piston (47) within the valve housing (14), and the storage tank (8).

20. A two-tube shock absorber as claimed in claim 19,
**characterized** in that the pilot control valve (11) is actuatable electromagnetically by an actuating unit, said unit comprising the control slide valve (49) which is formed in one part with the support (27) of a plunger coil (26).

21. A two-tube shock absorber as claimed in claim 19 or in claim 20,
**characterized** in that a horizontally extending wall (55) defines the cylindrical chamber (50) and has a stepped bore (56) whose section (57) having a smaller diameter ends up in the chamber (54) and whose section (58) having a larger diameter accommodates an axially slidable thrust member (59) which interacts with the front face of the control slide valve (49).

22. A two-tube shock absorber as claimed in anyone of claims 3 to 21,
**characterized** in that an intermediate position of the control slide valve (49) is provided in the condition of rest in which a partial connection exists between the chamber (24 or, respectively 54) that is defined by the main slide valve (16) or by the piston (47), within the valve housing (14) and the storage tank (8).

23. A two-tube shock absorber as claimed in anyone of claims 9 to 22,
**characterized** in that the intermediate position of the control slide valve (18, 49) is achieved by a third compression spring (60) which counteracts the second compression spring (25) prestressing the control slide valve (18, 49).

24. A two-tube shock absorber as claimed in anyone of claims 19 and 23,
**characterized** in that the third compression spring (60) is supported on the horizontal wall (55) defining the cylindrical chamber (50).

25. A two-tube shock absorber as claimed in claim 23 in conjunction with claim 10,
**characterized** in that the third compression spring (60) is clamped between the valve housing (14) and the plunger coil support (27).

26. A two-tube shock absorber as claimed in claim 25,
**characterized** in that the third compression spring (60) is positioned in a cylindrical recess (64) in the valve housing (14).

27. A two-tube shock absorber as claimed in claim 1,
**characterized** in that the operation of the shock absorber valve (10) in the lower range of piston speed corresponds to the operation of a single-stage slide valve whose electromagnetic actuation determines the degree of opening of the pilot control stage (11).

28. A two-tube shock absorber as claimed in claim 3,
**characterized** in that the operation of the shock absorber valve (10) in the upper range of piston speed corresponds to the operation of a two-stage pressure limiting valve, the electromagnetic actuation of the pilot control valve (11) determining the magnitude of the pressure differential at the main slide valve (16).

## Revendications

1. Amortisseur bitube à force d'amortissement variable réglable pour véhicules automobiles, composé par un cylindre de travail (1), dont l'espace intérieur est divisé en une première et une deuxième chambre de travail (5, 6) au moyen d'un piston (3) pouvant être déplacé via une tige de piston (2), un réservoir (8) partiellement rempli d'huile, comportant des communications hydrauliques permettant une compensation de volume entre les chambres de travail (5, 6) et le réservoir (8), un premier et un deuxième clapet de non-retour (4, 13), ainsi qu'une soupape d'amortissement (10) destinée à modifier la section de passage de l'une des communications hydrauliques, constituée par une soupape de pilotage (11) et une soupape principale (12) branchées en parallèle l'une à l'autre,
caractérisé en ce que, dans une plage inférieure de vitesses du piston, la force d'amortissement est déterminée uniquement par la section de passage variable de la soupape de pilotage (11), alors que la soupape principale (12) reste fermée, et en ce que, dans une plage supérieure de vitesses du piston, la force d'amortissement est déterminée par les sections de passage variables du tiroir principal (12) et du tiroir de pilotage (11).

2. Amortisseur bitube selon la revendication 1, caractérisé en ce que la soupape principale (12) suit la position de la soupape de pilotage (11) dans la plage supérieure de vitesses de piston.

3. Amortisseur bitube selon la revendication 2, caractérisé en ce que la soupape principale (12) ainsi que la soupape de pilotage (11) sont disposées de façon séparée du deuxième clapet de non-retour (13) dans un boîtier de soupape (14), la soupape principale (12) étant constituée par un tiroir principal (16) coopérant avec une arête de commande (15) ménagée dans le boîtier de soupape (14), et la soupape de pilotage (11) étant constituée par un tiroir de pilotage (18) à commande électromagnétique, coopérant avec des perçages de commande (17) aménagés dans le tiroir principal (16).

4. Amortisseur bitube selon la revendication 3, caractérisé en ce que l'arête de commande (15) est disposée au niveau des perçages d'échappement (19) ménagés dans le boîtier de soupape (14), communiquant avec le réservoir (8).

5. Amortisseur bitube selon la revendication 4, caractérisé en ce que le tiroir principal (16) est configuré de façon ouverte dans sa partie supérieure, et est pourvu de perçages (20) pouvant être amenés en communication avec les perçages d'échappement (19).

6. Amortisseur bitube selon l'une des revendications 3 à 5, caractérisé en ce que le tiroir principal (16) est rappelé, au moyen d'un premier ressort de pression (21), dans le sens de la fermeture de la soupape principale (12) et s'appuie, au repos, sur une butée.

7. Amortisseur bitube selon la revendication 6, caractérisé en ce que l'appui du tiroir principal (16) sur la butée s'effectue par l'intermédiaire de saillies (22).

8. Amortisseur bitube selon l'une des revendications 3 à 7, caractérisé en ce que le tiroir principal (16) est pourvu d'orifices d'étranglement (23), qui débouchent dans une chambre hydraulique (24) délimitée par le tiroir principal (16) dans le boîtier de soupape (14).

9. Amortisseur bitube selon la revendication 3, caractérisé en ce que le tiroir de pilotage (18) est guidé dans le tiroir principal (16) et s'appuie, au repos, sur ce dernier, sous l'action de la précontrainte d'un deuxième ressort de pression (25).

10. Amortisseur bitube selon la revendication 3, caractérisé en ce que la soupape de pilotage (11) peut être actionnée de façon électromagnétique au moyen d'une bobine mobile (26) coopérant avec un aimant permanent (30), et que le tiroir de pilotage (18) est enchaîné au support (27) de la bobine mobile au moyen d'un élément d'enchaînement (28), dont la tête (29) s'appuie, au repos, sur le tiroir principal (16).

11. Amortisseur bitube selon la revendication 10, caractérisé en ce que l'unité d'actionnement composée de la bobine mobile (26) et de l'aimant permanent (30) est disposée dans une chambre hydraulique (31) communiquant avec le réservoir (8), de manière telle que l'extrémité de l'élément d'enchaînement (28) fixé sur le support de la bobine mobile (27) soit soumise à la pression régnant à l'intérieur du réservoir (8).

12. Amortisseur bitube selon l'une des revendications précédentes, caractérisé en ce qu'un clapet non piloté (32) est prévu parallèlement à la soupape principale (12) et la soupape de pilotage (11), ce clapet n'étant actif qu'en phase de compression de l'amortisseur.

13. Amortisseur bitube selon la revendication 12, caractérisé en ce que le clapet (32) est agencé au niveau du deuxième clapet de non-retour (13) et est constitué par une bille (34) coopérant avec un siège de clapet (33) et rappelée par un ressort (35).

14. Amortisseur bitube selon la revendication 12 ou 13, caractérisé en ce que le clapet (32) est agencé dans un passage de communication entre la deuxième chambre (6) et le réservoir (8), la communication étant formée par des perçages (36, 37) ménagés dans une partie en forme de galet (38) du deuxième clapet de non-retour (13) et dans le boîtier de soupape (14), le perçage (37) prévu dans le boîtier de soupape (14) débouchant dans l'un des perçages d'échappement (19).

15. Amortisseur bitube selon l'une des revendications 3 à 9, caractérisé en ce que la soupape de pilotage (11) de celui-ci peut être commandée de façon électromagnétique, et en ce que la commande électromagnétique s'effectue au moyen d'un électroaimant proportionnel (39), dont l'induit (40) est relié au tiroir de pilotage (18) par l'intermédiaire d'un élément d'enchaînement (28), et dont la tête (29) s'appuie, au repos, sur le tiroir principal (16).

16. Amortisseur bitube selon la revendication 1 ou 2, caractérisé en ce que la soupape principale (12) ainsi que la soupape de pilotage (11) sont disposées de façon séparée du deuxième clapet de non-retour (13) dans le boîtier de soupape (14), la soupape principale (12) étant constituée par un piston de soupape (42) coopérant avec un siège d'étanchéité (41) aménagé dans une partie en forme de galet (38) du deuxième clapet de non-retour (13), et en ce que la soupape de pilotage (11) est constituée par un tiroir de pilotage (18) à commande électromagnétique, coopérant avec des perçages de commande (43) conformés dans le piston de soupape (42).

17. Amortisseur bitube selon la revendication 16, caractérisé en ce que la partie en forme de galet (38) délimite, en association avec le boîtier de soupape (14), une chambre hydraulique (44), à l'intérieur de laquelle s'engage le piston de soupape (42), et qui communique avec le réservoir (8).

18. Amortisseur bitube selon la revendication 17, caractérisé en ce que les perçages de commande (43) débouchent dans la chambre annulaire (44).

19. Amortisseur bitube selon la revendication 1, caractérisé en ce que la soupape principale (12) ainsi que la soupape de pilotage (11) sont disposées de façon séparée du deuxième clapet de non-retour (13) dans un boîtier de soupape (14), la soupape principale (12) étant constituée par un piston (47) guidé de façon étanche dans le boîtier de soupape (14), portant un plateau obturateur de soupape (45) et doté d'un alésage axial (46), et par un siège d'étanchéité (48) pouvant être obturé ou découvert par le plateau obturateur de soupape (45), aménagé dans la partie en forme de galet (38) du deuxième clapet de non-retour (13), alors que la soupape de pilotage (11) est constituée par une chambre cylindrique (50) aménagée dans un boîtier de soupape (14), recevant un tiroir de pilotage (49) rappelé par ressort dans le sens de la fermeture, et dont la paroi cylindrique (51), qui s'étend axialement, comporte des perçages radiaux (52) coopérant avec des perçages de commande (53) réalisés dans le tiroir de pilotage (49), et établissant une communication hydraulique entre une chambre (54) délimitée par le piston (47) dans le boîtier de soupape (14), et le réservoir (8).

20. Amortisseur bitube selon la revendication 19, caractérisé en ce que la soupape de pilotage (11) peut être actionnée de façon électromagnétique, le tiroir de pilotage (49) étant configuré d'un seul tenant avec le support (27) d'une bobine mobile (26) faisant partie du dispositif de commande électromagnétique.

21. Amortisseur bitube selon la revendication 19 ou 20, caractérisé en ce qu'une paroi horizontale (55) délimitant la chambre cylindrique (50) est prévue, qui comporte un alésage étagé (56), dont la section (57) de petit diamètre débouche dans la chambre (54), et dont la section (58) de grand diamètre reçoit un élément poussoir (59) axialement mobile, qui coopère avec la face frontale du tiroir de pilotage (49).

22. Amortisseur bitube selon l'une des revendications 3 à 21, caractérisé en ce qu'une position intermédiaire du tiroir de pilotage (49) est prévue au repos de celui-ci, dans laquelle une communication partielle est établie entre la chambre (24 ou 54) délimitée dans le boîtier de soupape (14) par le tiroir principal (16) ou le piston (47), et le réservoir (8).

23. Amortisseur bitube selon l'une des revendications 9 à 22, caractérisé en ce que la position intermédiaire du tiroir de pilotage (18, 49) est atteinte grâce à un troisième ressort de pression (60), qui agit à l'encontre du deuxième ressort de pression (25) exerçant une force de rappel sur le tiroir de pilotage (18, 49).

24. Amortisseur bitube selon les revendications 19 et 23, caractérisé en ce que le troisième ressort (60) prend appui sur la paroi horizontale (55) délimitant la chambre cylindrique (50).

25. Amortisseur bitube selon la revendication 23, en association avec la revendication 10, caractérisé en ce que le troisième ressort de pression (60) est comprimé entre le boîtier de soupape (14) et le support (27) de la bobine mobile.

26. Amortisseur bitube selon la revendication 25, caractérisé en ce que le troisième ressort de pression (60) est disposé dans un évidement cylindrique (64) ménagé dans le boîtier de soupape (14).

27. Amortisseur bitube selon la revendication 1, caractérisé en ce que le fonctionnement de la soupape d'amortissement (10) correspond, dans la plage inférieure de vitesses du piston, au fonctionnement d'une soupape à tiroir mono-étage, dont la commande électromagnétique détermine le degré d'ouverture de la soupape de pilotage (11).

28. Amortisseur bitube selon la revendication 3, caractérisé en ce que le fonctionnement de la soupape d'amortissement (10) correspond, dans la plage supérieure de vitesses du piston, au fonctionnement d'un clapet limiteur de pression à deux étages, la commande électromagnétique de la soupape de pilotage (11) déterminant le niveau de la pression différentielle agissant sur le tiroir principal (16).
